# EUROPEAN PATENT SPECIFICATION

(11) **EP 0 331 271 B1**
(45) Date of publication and mention of the grant of the patent: **05.07.1995**
(21) Application number: 89200568.7
(22) Date of filing: 06.03.1989
(51) Int. Cl.: A47J 31/40

(54) **Automatic beverage dispenser for hot beverages**
Automat für warme Getränke
Distributeur automatique de boissons chaudes

(30) Priority: 04.03.1988 NL 8800548
(43) Date of publication of application: 06.09.1989
(73) Proprietor: KONINKLIJKE OLLAND GROEP B.V., 3433 PJ Nieuwegein (NL)
(72) Inventor: Evers, Lucas Alphonsus Maria, NL-3442 TK Nieuwegein (NL); van Reeuwijk, Willem, NL-3363 JH Sliedrecht (NL)
(74) Representative: Boelsma, Gerben Harm, Ir.

(56) References cited:
- DE-A- 3 045 244
- US-A- 1 755 779
- US-A- 3 648 904

## Description

The invention relates An automatic dispenser for hot beverages, comprising a housing, a platform extending from a back wall of said housing to support at least one ingredient container, said container having a lower opening for ingredient discharge into a substantially horizontal tubular casing connected to the bottom part of said container, a metering screw being mounted within said tubular casing for rotation by means of an electric motor and adapted to receive ingredient from the container and to discharge a predetermined amount of said ingredient through a discharge opening and discharge sprout at the front end of said tubular casing into a mixing reservoir positioned below platform level and connecting also to a liquid source, said discharge opening at the front end of the tubular casing being normally closed by a spring loaded valve, a solenoid being provided in the starter circuit of the electromotor for moving said valve in the opening direction
Such a beverage dispenser having the features of the preamble of claim 1 is known from the US-A-3,648,904. Therein the ingredient container contains a liquid chocolate.

Different automatic beverage dispensers are known in this field, a.o. in so-called instant dispensers. The beverage is prepared by solving a powder, e.g. instant coffee or chocolate powder, in hot water and usually through a mixing beaker with stirrer is mixed as homogeneously as possible (see NL-A-8700760). Each powder is present in a container, which is removable from the automatic dispenser. Also known fresh filtering dispensers for coffee of tea in which fresh coffee of tea powder is first supplied to a cylinder from the relative container, the hot water being supplied to said cylinder. After the extraction of the coffee of tea, the obtained liquid is pressed from the cylinder through a filter means (in order to separate the powder residu therefrom) and enters a mixing beaker into which also milk powder or sugar may be supplied from similar containers.

In dry condition the powders are often very hygroscopic. The vapour rising from the hot liquid may reach said dry powders through the metering screws, so that the water from the vapour is absorbed by the powders and clumps of syrup is formed in the screw. Thereby the accuracy of the metering process is affected adversely. Coffee which has been dried by freezing forms with the water vapour a very tacky syrup sticking to the screw and even completely preventing the metering process.

Apart from moisture from the rising water vapour the hygroscopic powders also absorb moisture from the air. Because automatic dispensers are generally stationed at locations having a high humidity of the air (industrial plants, bathing pools, station platforms and so on), this causes problems, particularly if the dispenser has not been used for several days, e.g. during the weekend.

The position in which the screw is at the end of the metering process is not always the same. For it is that the metering takes place on a time basis. The screw is driven for a predetermined number of seconds and therefore not necessarily performs an even number of revolutions. Moreover, this is not desirable, since the adjustment of the volume to be metered, so the adjustment of the metering time, has to be flexible, and therefore continuous. Because the end position of the screw influences the metered volume, this results in variations in the metered volume. When small volumes are being metered, the relative deviation and therefore the accuracy of the metering is strongly influenced by the varying end position of the screw.

Dry powders are insensible to growth of bacteria. However, due to the liquid absorbtion a substratum for bacteria is generated. Growth or bacteria in the screw is unacceptable from a hygienic point of view. Another hygienic disadvantage is the spilling of powder when the ingredient container is taken out for cleaning the dispenser and filling the container. Easily "flowable" powders may flow through the screw because the screw does not constitute a proper closure. Less easily "flowable" powders often drop from the first worm of the screw. Spilling of ingredients in the just cleaned dispenser is undesirable from the hygienic point of view.

The spilling of ingredients from the screw also occurs as a result of vibrations, e.g. due to slamming the door of the dispenser. The ingredient, e.g. cocoa, then drops into the moist mixing beaker. If not immediately a beaker of chocolate is taken, a clump forms in the mixing beaker, which later on may cause obstruction of the mixing beaker, which in its turn may result in overflowing of the mixing beaker. Thereby the reliability is adversily influenced. The moisture problem due to the rising vapour may be counteracted by sucking the vapour from above the mixing beaker. However, such suction is not always sufficient and presents no solution for the moisture contained in the atmospheric air.

Sometimes the spilling problem when taking the container out is countered by the provision of a manually operable slide between the screw and a metering sprout extending to the mixing beaker. The disadvantage thereof is that one could forget to open such closure means when the containers are replaced in the dispenser, so that when the dispenser is switched on, no powder is metered.

A better solution is an automatic closing means.

In the dispenser known from the above mentioned US-A-3,648,904 a valve at the front end of the metering screw tube is actuated by a solenoid, which only opens the valve during the metering process. However, the valve is secured in the housing. If one desires to make the ingredient container removable for cleaning and filling, this of course should be done together with a closed valve.

The invention aims at removing the above mentioned disadvantages.

This is achieved according to the invention in that the valve is connected to the forward end of a stem that slidably extends through a central bore of the metering screw and has its rearward end projecting beyond the rear end of the tubular casing, where it is in abutting contact with a solenoid operated element the rearward end of the metering screw being provided with a gear portion adapted to slidingly engage a corresponding gear portion on the free end of the drive shaft of the electromotor, the ingredient reservoir including the tubular casing, the metering screw and the valve carrying stem contained therein forming a self-contained unit that is adapted to be placed and removed respectively by sliding it over the platform towards and away from said back wall.

Like with the automatic dispenser known from the US-A-3,648,904 preferably in the dispensor according to the invention the solenoid acts through a rocker lever on the back end of the valve stem since thereby it is no longer necessary to position the solenoid behind the valve stem, so that the depth dimension of the dispenser may be decreased.

It is advantageous if therewith the solenoid acts on the back end of the stem, positioned coaxially with the valve stem, and a separate driving pin is provided, which is freely axially slidable in the housing.

Said free driving pin remains in the housing when an ingredient container is taken out. If the driving pin is integral with the valve stem it projects far beyond the funnel shaped lower end of the container when this has been taken out, so that it would hinder the replacing of the container and could easily cause injury of the operator. Also the projecting end of this thin pin could be distorted, whereby the dispenser would no longer be operative.

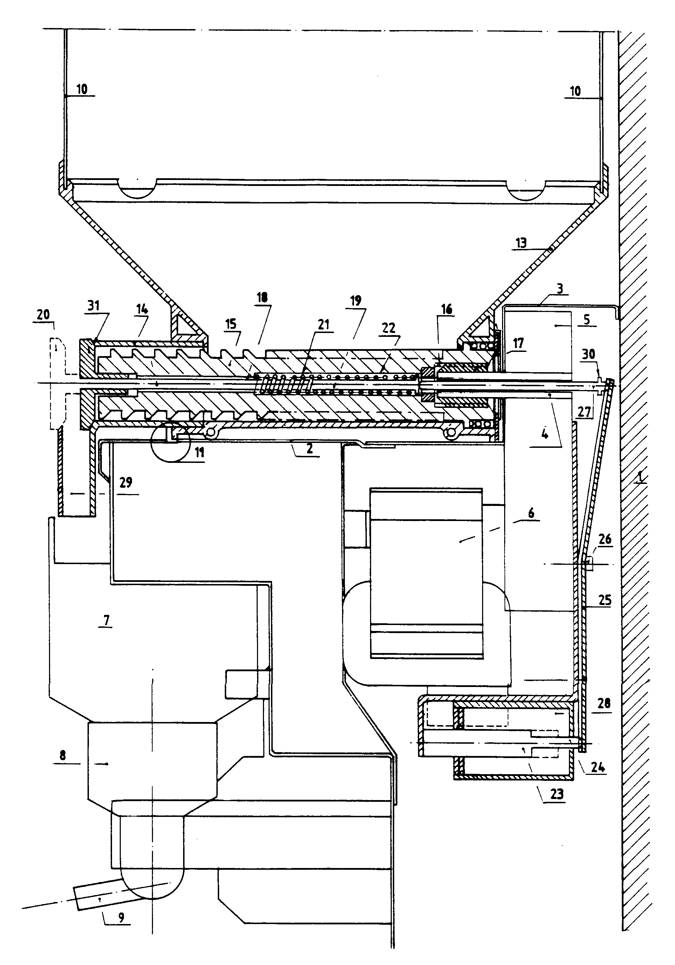

The invention will be explained below with reference to the drawing showing schematically an example of embodiment of the automatic beverage dispenser according to the invention, partially in a vertical section and partially in side view.

In the embodiment shown the housing of the beverage dispenser, the back wall of which is indicated by the reference number 1, carries a platform 2 having an elevated back part 3. In this elevated part 3 a hollow shaft 4 is journalled. Said shaft 4 is connected to an electromotor 6 by a transmission, not further shown, e.g. a gear transmission, received in a transmission housing 5.

At the front side of the dispenser a mixing beaker 7 has been provided below the platform 2, a mixing chamber 8 being provided below said beaker 7, and in which chamber a stirring means (not shown) is provided. The mixing chamber 8 has at its lower end a discharge sprout 9 for discharging the prepared beverages.

On top of the platform 2 a canister or container 10 for an ingredient is provided and locked to the platform 2 by means of snap means 11. A plurality of such containers 10 may be placed side by side, so as seen in the drawing one behind the other. Each container 10 is at its lower end provided with a funnel-shaped portion 13 extending to a mixing screw tube 14.

A metering screw 15 is received within said metering screw tube 14, said screw being hollow and provided in its back portion with an interior gear portion 16. When placing the container it is moved backwardly along the platform 2, whereby the gear 16 engages around a pinion, secured to the drive shaft 4, connected with the motor 6. The mixing screw 15 has a hollow central channel 18 and therein a valve stem 19 of a closing valve 20 is provided, said valve closing in the closed position the front end of the mixing screw tube 14. The valve is pushed to this closed position, in that a compression spring 21 is contained in a chamber 22, for which purpose the bore 18 of the metering screw is counterbored along a predetermined portion of its length.

A solenoid 23 is secured below the motor 6 in the housing of the dispenser, the solenoid being shown in the drawing in its non-energised condition. A pin-shaped end of the solenoid engages one leg of a rocker lever 25, which is pivotably connected in a position 26 with the housing of the dispenser. The other leg of the rocker lever 25 is in engagement with a pin, called driving pin 27, which is received freely slidable in the hollow shaft 4.

If now a button (not shown) of the dispenser is pressed whereby the electromotor 6 is energized, simultaneously the solenoid 23 is energized which is attracted by a coil 28 to the right as seen in the figure. Thereby the rocker lever rocks around the position 26 and the upper leg pushes the driving pin 27 to the left. In that the left end of the pin 4 is in engagement with the right end of the valve stem 19, the pin pushes the valve stem to the left against the force of the spring 21, whereby the valve 20 is opened. The motor drives the shaft 4 to the transmission in the housing 5 and thereby the screw 15, whereby powder in the container 10 is moved to the left and drops into the mixing beaker 7 through the metering sprout 29.

It will be clear that hereby the aims as mentioned above have been achieved. The ingredient containers with metering screw and closing valve as shown can also be used in automatic beverage dipensers of the same type, which for price considerations have not been provided with electromagnetic opening mechanisms. The solenoid 23, 24 and the rocker lever 25 - 28 are omitted in that case. However, the driving pin 27 is maintained and at the position of the upper end of the rocker lever as shown in the drawing an abutment or plate is secured to the wall of the transmission housing 5 of the dispenser. When the ingredient container is placed in the operative position, e.g. after cleaning and filling thereof, in that case the right and of the driving pin 27 engages said plate, whereby also the valve is moved to the open condition as shown with broken lines. Also in this case powder is metered when actuating the electromotor. However, in this case the advantage is not present that after removing a beaker with beverage, the mixing screw tube 14 is closed and thereby the contents of the container are closed from the atmospheric air and from the vapours rising from the mixing beaker.

The driving pin 27 remains in the dispenser housing when the container is removed, by means of an abutment 30. If the valve stem would be integral this to have the same length as in the imbodiment shown, that of the valve stem plus that of the driving pin, this projecting end would hinder the replacing of the container and could easily cause injury of the operator. Also the projecting and of this thin pin could be distorted, whereby the dispenser would no longer be operative.

## Claims

1. An automatic dispenser for hot beverages, comprising a housing, a platform (2) extending from a back wall (1) of said housing to support at least one ingredient container (10, 13), said container having a lower opening for ingredient discharge into a substantially horizontal tubular casing (14) connected to the bottom part (13) of said container, a metering screw (15) being mounted within said tubular casing (14) for rotation by means of an electric motor (6) and adapted to receive ingredient from the container (10, 13) and to discharge a predetermined amount of said ingredient through a discharge opening and discharge sprout (29) at the front end of said tubular casing (14) into a mixing reservoir (7, 8) positioned below platform level and connecting also to a liquid source, said discharge opening at the front end of the tubular casing (14) being normally closed by a spring loaded valve (20), a solenoid (23) being provided in the starter circuit of the electromotor (6) for moving said valve (20) in the opening direction, characterized in that said valve (20) is connected to the forward end of a stem (19) that slidably extends through a central bore (18) of the metering screw (15) and has its rearward end projecting beyond the rear end of the tubular casing, where it is in abutting contact with a solenoid (23) operated element (25), the rearward end of the metering screw (15) being provided with a gear portion (16) adapted to slidingly engage a corresponding gear portion (17) on the free end of the drive shaft (4) of the electromotor (6), the ingredient reservoir (10, 11) including the tubular casing (14), the metering screw (15) and the valve (20) carrying stem (19) contained therein forming a self-contained unit that is adapted to be placed and removed respectively by sliding it over the platform towards and away from said back wall (1).

2. An automatic dispenser according to claim 1, characterized in that said drive shaft (4) is taking a stationary horizontal position in front of said back wall (1) and carries a straight external gear (17) that may slidingly engage a corresponding straight internal gear provided in a widened rear portion of the central bore (18) of the metering screw (15), the valve (20) carrying stem (19) being in abutting contact with said solenoid (23) operated element (25) by means of an intermediate pushing rod (27) that is slidingly extending through a central bore of said drive shaft (4) and slidingly held therein.

## Patentansprüche

1. Automat für warme Getränke, mit einem Gehäuse, einer sich von der hinteren Wand (1) dieses Gehäuses erstreckenden Auflage (2) zur Unterstützung mindestens eines Ingredienzienbehälters (10, 13), welche Behälter unten eine Öffnung für die Ingredienzienabfuhr in ein etwa waagerechten, mit dem Bodenteil (13) des Behälters verbundenes rohrförmiges Gehäuse (14) hat, in welchem rohrförmigen Gehäuse (14) eine von einem Elektromotor (6) antreibbare Dosierschnecke (15) angeordnet ist, welche dazu geeignet ist Ingredienzien aus dem Behälter (10, 13) aufzunehmen und eine vorbestimmte Menge dieser Ingredienzien durch eine Auslassöffnung und einen Auslassstutzen (29) am vorderen Ende des rohrförmigen Gehäuses (14) an einem Mischbehälter (7, 8) abzugeben, welcher Mischbehälter unter dem Niveau der Auflage angeordnet ist und an einer Flüssigkeitsquelle angeschlossen ist, welche Auslassöffnung am vorderen Ende des rohrförmigen Gehäuses (14) normal von einem Feder-beaufschlagten Ventil (20) geschlossen ist, und wobei zum Bewegen des Ventils (20) in die geöffnete Lage ein Elektromagnet (23) im Schaltkreis des Elektromotors (6) vorgesehen ist, dadurch gekennzeichnet, dass das Ventil (20) am vorderen Ende einer Spindel (19) befestigt ist, welche sich verschieblich durch eine zentrale Bohrung (18) der Dosierschnecke (15) erstreckt und deren hintere Ende durch das hintere Ende des rohrförmigen Gehäuses hinausragt, wo es gegen ein von einem Elektromagnet (23) bedientes Element (25) anliegt, wobei das hintere Ende der Dosierschnecke (15) mit einem Zahnradteil (16) versehen ist, der verschieblich mit einem entsprechenden Zahnradteil (17) auf dem freien Ende der Antriebswelle (4) des Elektromotors (6) kämmt, und wobei der Ingredienzienbehälter (10, 11), einschliesslich des rohrförmigen Gehäuses (14), der Dosierschnecke (15) und der in letzterer enthaltenen, das Ventiel (20) tragenden Spindel (19) eine selbstständige Einheit bildet, welche durch Verschieben auf der Auflage gegen die hintere Wand (1) bezw. in der von der letzteren abgekehrten Richtung angebracht bezw. abgenommen werden kann.

2. Automat nach Abspruch 1, dadurch gekennzeichnet, dass die Antriebswelle (2) eine feste, waagerechte Lage vor dem hinteren Wand (1) ein Ritzel (17) mit geraden Zähnen trägt, das verschieblich mit entsprechenden geraden Zähnen innerhalb eines erweiteren Abschnitts der zentralen Bohrung (18) der Dosierschnecke (15) in Eingriff treten kann, wobei die das Ventil (20) tragende Spindel (19) gegen das vom Elektromagnet (23) bediente Element (25) anliegt unter Vermittlung einer Druckstange (27), welche sich durch eine zentrale Bohrung der Antriebewelle (4) erstreckt und verschlieblich in dieser gehalten wird.

## Revendications

1. Un distributeur automatique de boissons chaudes, comprenant un bâti, une plate-forme (2) s'étendant à partir d'une paroi arrière (1) du bâti pour supporter au moins un réservoir d'ingrédient (10, 13), ce réservoir ayant une ouverture inférieure pour l'évacuation d'un ingrédient vers un carter tubulaire pratiquement horizontal (14) qui est accouplé à la partie inférieure (13) du réservoir, une vis de dosage (15) étant montée à l'intérieur du carter tubulaire (14) pour tourner sous l'action d'un moteur électrique (6), et étant adaptée pour recevoir un ingrédient à partir du réservoir (10, 13) et pour évacuer une quantité prédéterminée de cet ingrédient à travers une ouverture d'évacuation et un tube d'évacuation (29) à l'extrémité avant du carter tubulaire (14), vers un réservoir de mélange (7, 8) qui est placé au-dessous du niveau de la plate-forme et qui est également relié à une source de liquide, l'ouverture d'évacuation à l'extrémité avant du carter tubulaire (14) étant fermée au repos par un obturateur (20) sollicité par un ressort, et un électro-aimant (23) étant incorporé dans le circuit de démarrage du moteur électrique (6), pour déplacer l'obturateur (20) dans la direction d'ouverture, caractérisé en ce que l'obturateur (20) est fixé à l'extrémité avant d'une tige (19) qui s'étend de façon coulissante à travers un alésage central (18) de la vis de dosage (15) et dont l'extrémité arrière fait saillie au-delà de l'extrémité arrière du carter tubulaire, où elle porte contre un élément (25) actionné par un électro-aimant (23), l'extrémité arrière de la vis de dosage (15) étant munie d'une partie dentée (16) qui est conçue pour s'adapter de façon coulissante sur une partie dentée correspondante (17) sur l'extrémité arrière de l'arbre d'entraînement (4) du moteur électrique (6), le réservoir d'ingrédient (10, 11) comprenant le carter tubulaire (14), la vis de dosage (15) et la tige (19) portant l'obturateur (20) se trouvant à l'intérieur, formant un ensemble autonome qui est conçu de façon qui l'on puisse respectivement le mettre en place et le retirer en le faisant glisser sur la plate-forme vers la paroi arrière (1) et à partir de celle-ci.

2. Un distributeur automatique selon la revendication 1, caractérisé en ce que l'arbre d'entraînement (4) occupe une position horizontale fixe devant la paroi arrière (1) et il porte une denture extérieure droite (17) qui peut s'adapter de façon coulissante sur une denture intérieure droite correspondante qui est formée dans une partie arrière élargie de l'alésage central (18) de la vis de dosage (15), la tige (19) qui supporte l'obturateur (20) portant contre l'élément (25) actionné par l'électro-aimant (23) au moyen d'un poussoir intermédiaire (27) qui s'étend de façon coulissante à travers un alésage central de l'arbre d'entraînement (4) et qui est maintenu de façon coulissante à l'intérieur de ce dernier.
